# EUROPÄISCHE PATENTSCHRIFT

(11) **EP 1 490 949 B1**
(45) Veröffentlichungstag und Bekanntmachung des Hinweises auf die Patenterteilung: **03.05.2006**
(21) Anmeldenummer: 03706410.2
(22) Anmeldetag: 01.02.2003
(51) Int. Cl.: H02K 15/095, H02K 3/52

(54) **STATOR FÜR ELEKTROMOTOREN MIT WICKLUNGS-VERSCHALTUNGSANORDNUNG**
STATOR FOR ELECTRIC MOTORS HAVING A WINDING INTERCONNECTION ASSEMBLY
STATOR POUR MOTEURS ELECTRIQUES COMPRENANT UN SYSTEME D'INTERCONNEXION D'ENROULEMENT

(30) Priorität: 26.03.2002 DE 10213743
(43) Veröffentlichungstag der Anmeldung: 29.12.2004
(73) Patentinhaber: ebm-papst Mulfingen GmbH & Co.KG, 74673 Mulfingen (DE)
(72) Erfinder: LUTZ, Josef, 84034 Landshut (DE); MASCHKE, Matthias, 74653 Künzelsau (DE); POLLOK, Erich, 97996 Niederstetten (DE)
(74) Vertreter: Zapf, Christoph
(86) Internationale Anmeldenummer: PCT/EP2003/001003
(87) Internationale Veröffentlichungsnummer: WO 2003/081755

(56) Entgegenhaltungen:
- EP-A- 0 064 105
- EP-A- 0 777 312
- EP-A- 0 987 811
- DE-A- 19 740 938

## Beschreibung

Die vorliegende Erfindung betrifft einen Stator für einen Elektromotor, insbesondere für einen leistungsstarken Niederspannungsmotor der Außenläufer-Bauart, mit einem Statorblechpaket mit einer Anzahl von Statomuten und Statorzähnen zur Aufnahme von Statorwicklungen und mit einer Verschaltungsanordnung zum Verschalten von Wicklungsdrähten der Statorwicklungen, wobei die um die Statorzähne in die Statomuten gewickelten Statorwicklungen auf beiden Stirnseiten das Statorblechpaket mit einem Wickelkopf überragen.

Bei leistungsstarken Niederspannungsmotoren treten wegen der niedrigen Versorgungsspannung (beispielsweise U ≤ 24V) relativ große Motor-Ströme auf (z. B. I > 20 A). Um in den Statorwicklungen die Stromdichte in zulässigen Grenzen zu halten, können entweder relativ dicke Wicklungsdrähte verwendet werden, oder es können mehrere Drähte pro Wicklungsstrang parallel gewickelt werden. Eine Verwendung von Draht mit großem Querschnitt ist aber insofern problematisch, als dies zu einer großen Steifigkeit des Drahtes führt, so dass das Wickeln nur sehr langsam erfolgen kann. Dies führt zu einem hohen Zeitaufwand für den Wickelvorgang. Werden dagegen mit dünnerem Draht mehrere Wicklungen parallel gewickelt, so führt dies ebenfalls zu Problemen während des Wickelvorgangs und insbesondere bei der Verschaltung der zahlreichen Wicklungen bzw. Wicklungslagen untereinander.

Es ist bekannt, zur Verschaltung der Wicklungen oberhalb des Wickelkopfes eine Leiterplatte mit Leiterbahnen zu verwenden, an denen die Wicklungsdrahtenden jeweils angeschlossen werden müssen. Mehrere parallel gewickelte Wicklungsdrähte mit dieser Technik zu verschalten ist sehr aufwändig, und zwar vor allem dann, wenn zusätzlich zu den Verbindungen noch elektrische bzw. elektronische Bauelemente, wie sie beispielsweise für die Kommutierung eines elektronisch kommutierten Motors erforderlich sind, auf der Leiterplatte untergebracht und angeschlossen werden müssen. Zudem sind die Leiterbahnen üblicher Leiterplatten aufgrund von sehr kleinen Leiterquerschnitten nur für geringe Ströme und somit nicht für leistungsstärkere Niederspannungsmotoren geeignet.

Die EP 0 777 312 B1 beschreibt einen Stator, der bevorzugt für Motoren mit kleiner Spannung und großem Strom geeignet sein soll. Dazu weist die Verschaltungsanordnung ringförmige Verbindungsleiter mit relativ großem Leiterquerschnitt auf, die in nutenförmigen Kammem eines zur Motorachse konzentrischen Isolierteils sitzen. Diese Ausführung ist zwar hinsichtlich der Verschaltungsanordnung für hohe Ströme geeignet, wobei aber eine Parallelwicklung von mehreren Wicklungssträngen nicht beschrieben ist. Die bekannte Anordnung wäre dafür aber auch ungünstig, weil jeder einzelne Wicklungsdraht gesondert an dem jeweiligen kreisförmigen Verbindungsleiter anzuschließen wäre. Außerdem ist das Isolierteil wie in der EP 0 987 811 A1 mit den Verbindungsleitern oberhalb des Wickelkopfes angeordnet, woraus eine große Baulänge des Stators und des damit ausgestatteten Motors resultiert.

Weitere ähnliche Ausführungen beschreiben auch die US 5 196 752, die DE-OS 24 41 175 und die DE 199 20 127 C2.

Weitere Statoren sind in der EP 1 016 199 B1 und der DE 41 22 529 A1 beschrieben. Dabei sind jeweils Anschlußkontaktelemente im Mittelbereich des Stator axial außerhalb bzw. oberhalb des Wickelkopfes an einem z. B. hohlzylindrischen Isolierteil gehalten. Auch dies führt zu einer großen Baulänge und schließt ein Wickeln von mehreren parallelen Wicklungssträngen praktisch aus.

Der vorliegenden Erfindung liegt die Aufgabe zugrunde, einen Stator der genannten Art so zu verbessern, dass eine vor allem bezüglich des Wickelvorganges einfache, schnelle und damit insgesamt wirtschaftliche Herstellbarkeit, eine kompakte Bauform, insbesondere eine geringe axiale Baulänge, sowie eine Eignung für hohe Motorströme erreicht werden.

Erfindungsgemäß wird dies dadurch erreicht, dass die Verschaltungsanordnung aus Wicklungskontaktelementen und Verschaltungskontaktelementen besteht, wobei zumindest die Verschaltungskontaktelemente auf einer Stirnseite des Statorbleckpaketes im Wesentlichen innerhalb eines von den Statorwicklungen und einer vom Wickelkopf definierten Ebene begrenzten Raumes angeordnet sind, wobei die Wicklungskontaktelemente den Statorzähnen derart als statorseitig ortsfeste Wickelstützpunkte zugeordnet sind, dass die Statorwicklungen in einem kontinuierlichen Wickelvorgang auf die Statorzähne und jeweils mit den Wicklungsdrähten über die Wicklungskontaktelemente wickelbar sind, wobei jedes Verschaltungskontaktelement eine bestimmte Gruppe der Wicklungskontaktelemente - und somit auch der damit verbundenen Statorwicklungen - miteinander elektrisch verbindet.

Die erfindungsgemäße "versenkte" Unterbringung der Verschaltungsanordnung innerhalb des Wickelkopf-Bereichs führt vorteilhafterweise zu der angestrebten kompakten Bauform, d. h. zu einer sehr kurzen Baulänge des Stators. Zudem vereinfacht sich der Wickelvorgang, da durch die als Wickelstützpunkte fungierenden Wicklungskontaktelemente der Wicklungsdraht kontinuierlich durchlaufend und in Stator-Umfangsrichtung der Reihe nach auf alle Statorzähne gewickelt werden kann. Durch die erfindungsgemäße Ausgestaltung können auch problemlos mehrere parallele Wicklungsstränge gewickelt werden, indem der Wicklungsdraht zunächst ausgehend von einem ersten Wicklungskontaktelement zur Bildung von ersten Wicktungslagen nacheinander auf alle Statorzähne gewickelt und dabei jeweils zwischen den Statorzähnen durchlaufend über die jeweiligen Wicklungskontaktelemente geführt wird. Nachfolgend kann dieser Vorgang kontinuierlich durchlaufend, d. h. ohne den Draht abzuschneiden, beliebig oft wiederholt werden, um auf den Statorzähnen weitere Wicklungslagen zu bilden, bis der gewünschte Gesamt-Leiterquerschnitt pro Wicklungsstrang erreicht ist. Alle Wicklungslagen sind dann parallel mit zugehörigen Wicklungskontaktelementen verbunden, wobei abschließend auf geeignete Weise der elektrische Kontakt zwischen den Wicklungskontaktelementen und den Wicklungsdrähten hergestellt wird, beispielsweise durch Löten, Heißpressen oder (Ultraschall-) Schweißen. Zur anschließenden Herstellung der eigentlichen Wicklungsverschaltung brauchen dann lediglich die erfindungsgemäßen Verschaltungskontaktelemente im inneren Zentralbereich der Stator-Stirnseite eingesetzt und mit den jeweils zugehörigen Wicklungskontaktelementen unmittelbar oder mittelbar elektrisch verbunden zu werden, z. B. ebenfalls durch Löten, Heißpressen oder Schweißen oder aber andere geeignete Maßnahmen. Dadurch können die Statorwicklungen gruppenweise beliebig, z. B. in Dreieck-oder Sternschaltung, verschaltet werden. Die Wicklungs- und Verschaltungskontaktelemente können auf einfache Weise, insbesondere als Blechformteile, mit ausreichend großem Leiterquerschnitt ausgeführt werden, um auch hohe Ströme mit geringer Stromdichte führen zu können.

In bevorzugter Ausgestaltung der Erfindung sind die einzelnen Gruppen der Wicklungskontaktelemente über Verbindungselemente mit einer Leiterplatte verbunden. Diese Leiterplatte ist insbesondere in einer zur Motorachse senkrechten Lage vorzugsweise im Bereich der der Verschaltungsanordnung gegenüberliegenden Stirnseite angeordnet. Wenn bei einer ersten möglichen Ausführung die Wicklungskontaktelemente mit den Wicklungsdrahtanschlüssen und die Verschaltungskontaktelemente auf der gleichen Stirnseite angeordnet sind, sind die Verbindungselemente von dieser Stirnseite auf die andere Stirnseite des Statorblechpaketes durchgeführt. Es liegt aber auch eine Ausführung im Bereich der Erfindung, bei der alle Wicklungskontaktelemente über Verlängerungen auf die gegenüberliegende Stirnseite durchgeführt sind, wo dann mittels der Verschaltungskontaktelemente die Wicklungsverschaltung erfolgt. Dabei liegen somit die Wicklungsdrahtanschlüsse und die Verschaltungsanordnung mit den Verschaltungskontaktelementen auf gegenüberliegenden Stirnseiten, und die Leiterplatte wird auf der Seite der Wicklungsdrahtanschlüsse über die Verbindungselemente angebracht. In beiden Fällen sind die Leiterplatten-Verbindungselemente bevorzugt von Verlängerungen einer Teilmenge der Wicklungskontaktelemente gebildet, und sie überragen den Stator auf der zur Leiterplatte weisenden Seite. Die andere Seite, auf der die erfindungsgemäßen Elemente der Verschaltungsanordnung "versenkt" innerhalb des Wickelkopf-Bereichs liegen, wird später - im bevorzugten Falle eines Außenläufermotors - von einem Außenläufer umschlossen.

Weitere vorteilhafte Ausgestaltungsmerkmale der Erfindung sind in den Unteransprüchen sowie der folgenden Beschreibung enthalten.

Anhand von in der Zeichnung veranschaulichten, bevorzugten Ausführungsformen soll die Erfindung beispielhaft näher erläutert werden. Dabei zeigen:
- Fig. 1: eine Perspektivansicht einer ersten Ausführung eines erfindungsgemäßen Stators auf die Seite der Verschaltungsanordnung,
- Fig. 2: zwei unterschiedliche Ausführungen von Wicklungskontaktelementen in Perspektivansicht,
- Fig. 3: eine Perspektivansicht des ursprünglichen Statorblechpaketes ohne Statorwicklungen und ohne Verschaltungsanordnung,
- Fig. 4: eine Darstellung des Statorblechpaketes gemäß Fig. 3 in einem mit den Wicklungskontaktelementen bestückten Zustand,
- Fig. 5: das Statorblechpaket nach Fig. 4 mit den gewickelten Statorwicklungen, jedoch noch ohne Verschaltungskontaktelemente,
- Fig. 6: eine Ansicht ähnlich Fig. 5 während des Einsetzens der Verschaltungskontaktelemente,
- Fig. 7: eine Seitenansicht des fertigen Stators, der beispielhaft mit einer Leiterplatte verbunden ist,
- Fig. 8: eine stark schematische Stimansicht des Stators mit einem Wickelschema für eine beispielhaft zweifache Bewicklung mit Verschaltung in Dreieckschaltung,
- Fig. 9: ein Schaltbild zur Erläuterung des Wickelvorganges, wegen besserer Übersichtlichkeit nur für einen einfach bewickelten Motor,
- Fig. 10: das Schaltbild nach Fig. 9 im verschalteten Zustand (Dreieckschaltung),
- Fig. 11: eine Ansicht analog Fig. 8, jedoch in Stemschaltung,
- Fig. 12: eine Darstellung analog Fig. 10 für die Sternschaltung nach Fig. 11,
- Fig.13: eine perspektivische Explosionsdarstellung der Bestandteile des erfindungsgemäßen Stators in der Ausführung gemäß Fig. 1 bis 10 mit zusätzlichen Teilen eines Außenläufermotors,
- Fig. 14: eine Ansicht analog zu Fig. 4 einer Ausführungsvariante und
- Fig. 15: Einzelteile der Ausführung nach Fig. 14 in einer perspektivischen Explosionsdarstellung.

In den verschiedenen Figuren der Zeichnung sind gleiche Teile stets mit den gleichen Bezugszeichen versehen.

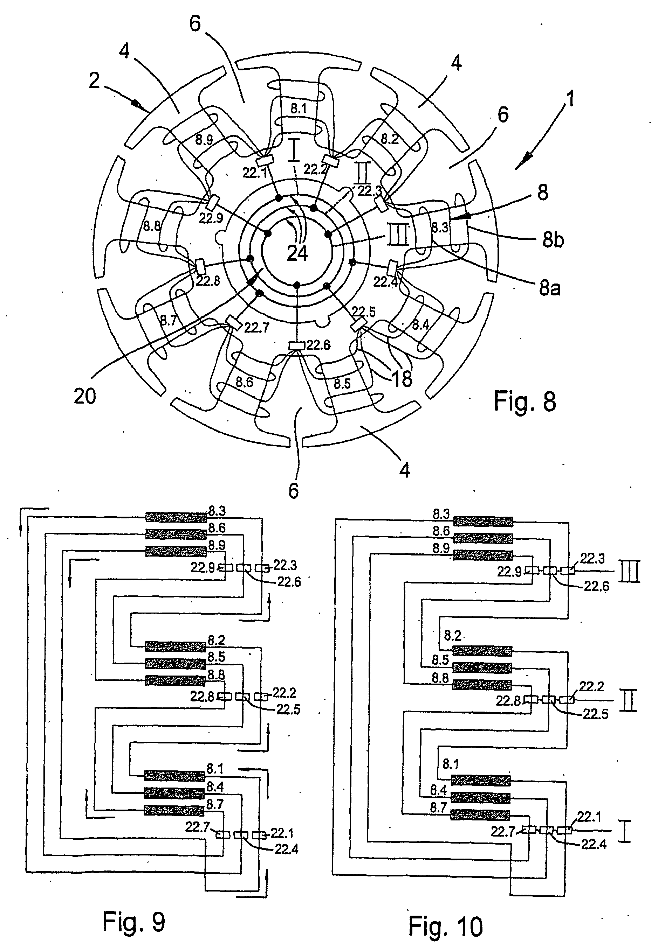

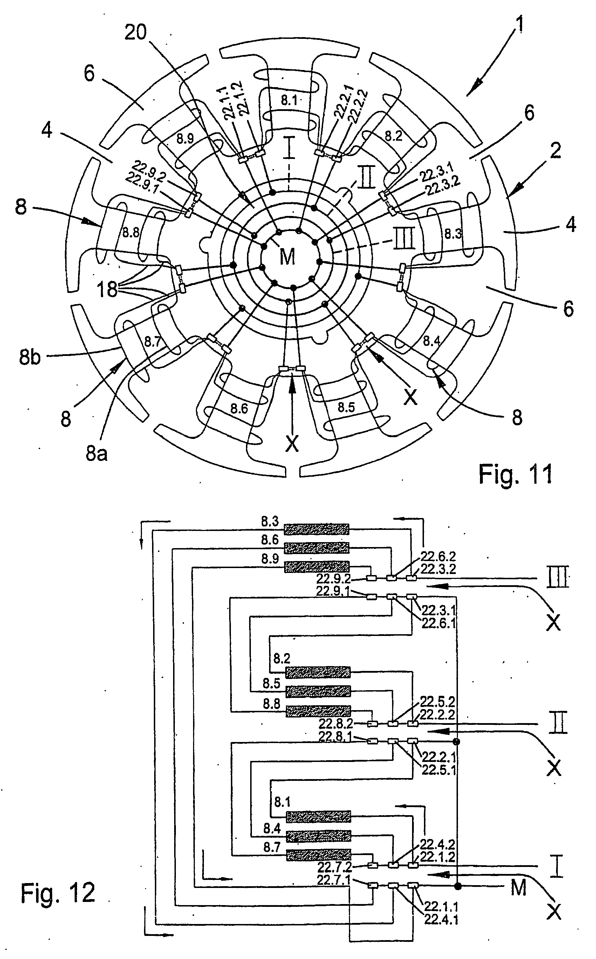

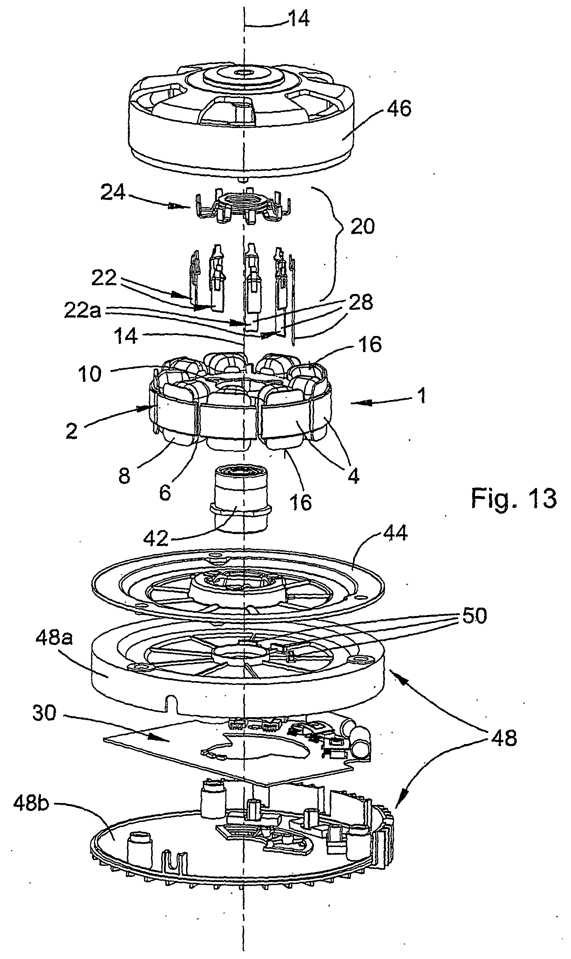

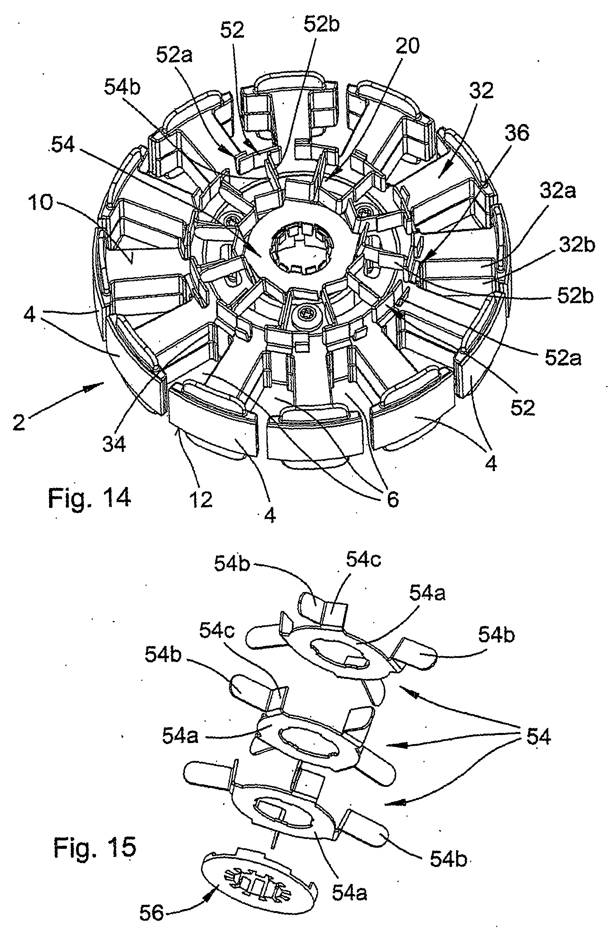

Die Erfindung wird zunächst beispielhaft anhand eines Stators 1 mit einem Statorblechpaket 2 mit neun Statorzähnen (Statorpolen bzw. Polzähnen) 4 und dementsprechend neun Statomuten 6 sowie neun Statorwicklungen 8 erläutert. Die Erfindung ist auf diese Anzahl "neun" aber natürlich nicht beschränkt (vergleiche die Ausführungsvariante gemäß Fig. 14 mit beispielhaft zwölf Zähnen/Nuten/Wicklungen). Die auf die Statorzähne 4 und durch die Statomuten 6 gewickelten Statorwicklungen 8 überragen auf beiden Stirnseiten 10 und 12 das Statorblechpaket 2 axial, d. h. in Richtung einer Motorachse 14 (vgl. Fig. 13), mit einem sogenannten Wickelkopf 16. Um einen hohen Motorstrom bei geringer Stromdichte zu ermöglichen, ist bevorzugt vorgesehen, dass - siehe dazu Fig. 8 und 11 - jede Statorwicklung 8 durch mindestens zwei parallele Wicklungslagen 8a, 8b gebildet ist, wobei durch Verwendung von relativ dünnem und dadurch flexiblerem Drahtmaterial eine gute Wickelbarkeit erreicht wird. Dies wird im Folgenden noch genauer erläutert werden.

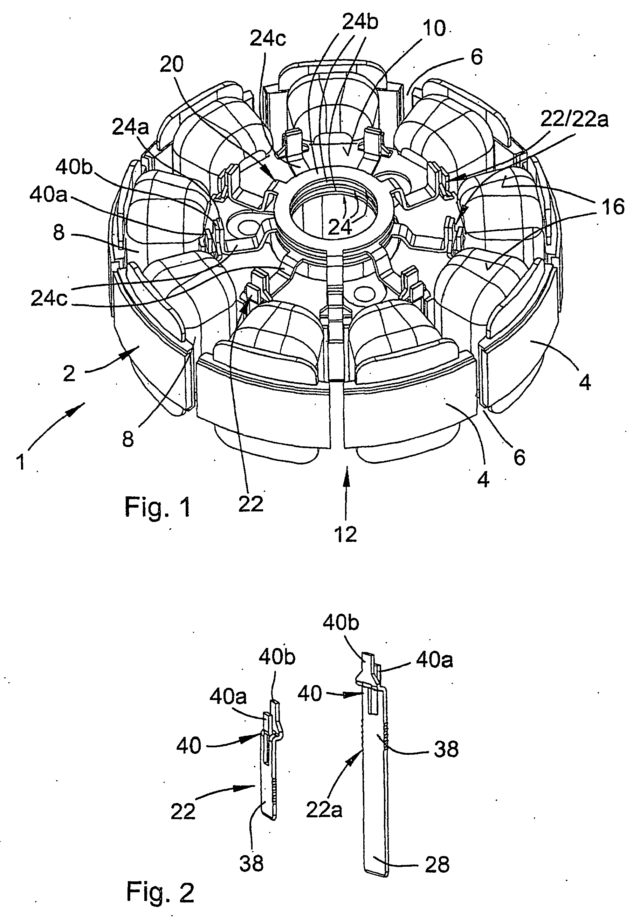

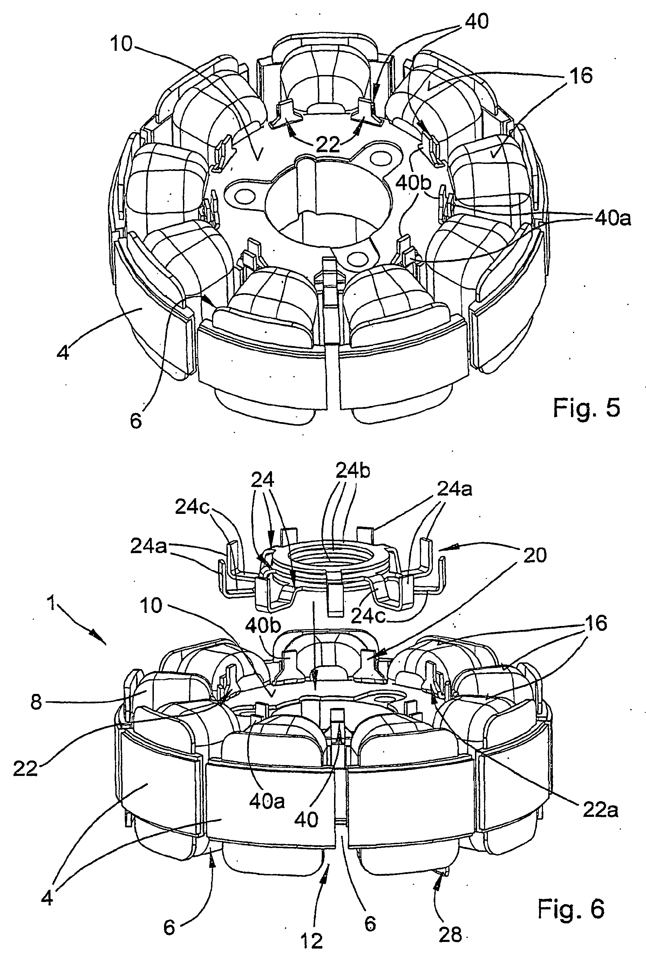

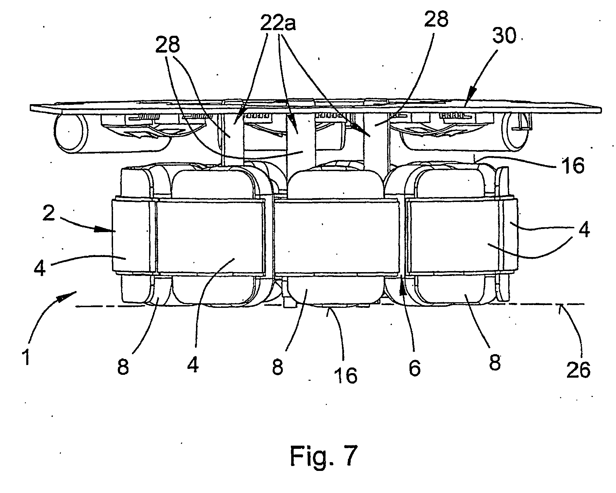

Zum Verschalten der Wicklungsdrähte 18 (siehe insbesondere Fig. 8 und 11) der Anfänge und Enden der Statorwicklungen 8 bzw. der mehreren Wicklungslagen 8a, 8b ist auf der einen Stirnseite 10 des Statorblechpaketes 2 eine neuartige Verschaltungsanordnung 20 vorgesehen. Erfindungsgemäß besteht diese Verschaltungsanordnung 20 aus Wicklungskontaktelementen 22 bzw. 22a (siehe Fig. 13 und auch die gesonderte Darstellung in Fig. 2) und aus Verschaltungskontaktelementen 24 (siehe nochmals Fig. 13 und auch Fig. 6). Die Verschaltungsanordnung 20 ist mit diesen Elementen 22, 22a, 24 innerhalb eines radial bzw. in Umfangsrichtung von den Statorwicklungen 8 und axial von einer vom Wickelkopf 16 definierten Ebene 26 (siehe Fig. 7) begrenzten Raumes angeordnet. Dadurch ergibt sich der Vorteil einer platzsparenden Unterbringung der Verschaltungsanordnung 20 und einer insgesamt kurzen Baulänge des Stators 1. Die Wicklungskontaktelemente 22, 22a sind erfindungsgemäß den Statorzähnen 4 bzw. den Statomuten 6 derart als statorseitig ortsfeste Wickelstützpunkte zugeordnet, dass die Statorwicklungen 8 (8a, 8b) in einem kontinuierlichen Wickelvorgang auf die Statorzähne 4 und jeweils mit den Wicklungsdrähten 18 über die Wicklungskontaktelemente 22, 22a wickelbar sind. Jedes Verschaltungskontaktelement 24 verbindet eine bestimmte Gruppe I, II, III und gegebenenfalls M (siehe dazu Fig. 8 bis 12) der Wicklungskontaktelemente 22, 22a - und somit auch der damit jeweils verbundenen Statorwicklungen 8; 8a, 8b - elektrisch miteinander.

In weiterer vorteilhafter Ausgestaltung der Erfindung sind die einzelnen Gruppen I, II, III; M der Wicklungskontaktelemente 22, 22a über Verbindungselemente 28 mit einer Leiterplatte 30 verbunden (siehe insbesondere Fig. 7 und 13), wobei die Leiterplatte 30 vorzugsweise im Bereich der der Verschaltungsanordnung 20 gegenüberliegenden Stirnseite 12 des Stators 1 angeordnet ist. Dazu sind die Verbindungselemente 28 von der einen Stirnseite 10 auf die andere Stirnseite 12 des Statorblechpaketes 2 durchgeführt.

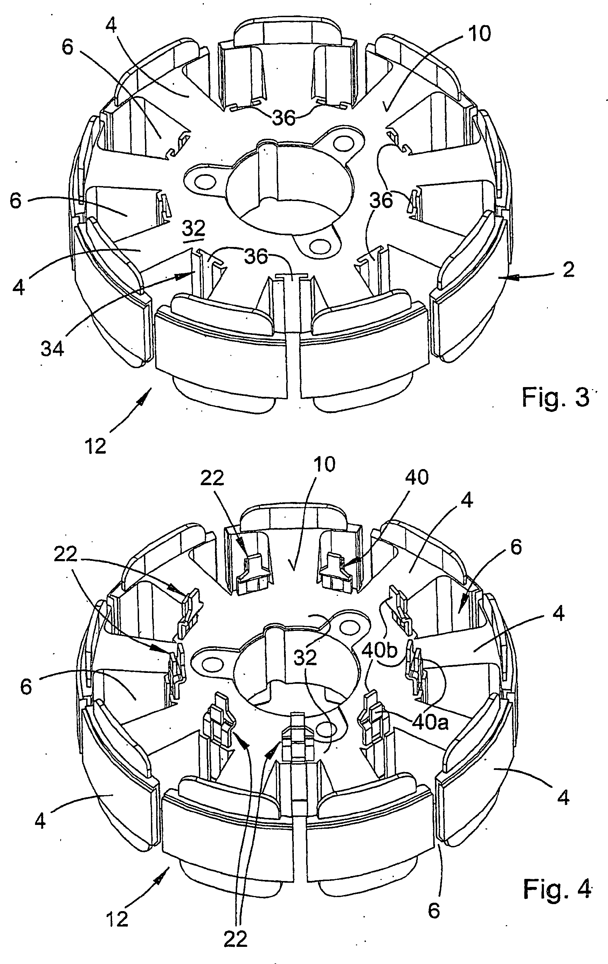

Wie am Besten in Fig. 3 und 4 erkennbar ist, ist das Statorblechpaket 2 auf seinen beiden Stirnseiten 10, 12 sowie innerhalb der Statomuten 6 mit einer elektrisch isolierenden Kunststoffschicht 32 versehen, die entweder gemäß Fig. 1 bis 7 angespritzt oder angegossen oder gemäß Fig. 14 durch zwei vorgeformte, in die Statomuten 6 eingreifende Stim-Endscheiben 32a, 33b gebildet sein kann. Vorteilhafterweise sind im Bereich eines Nutgrundes 34 jeder Statomut 6 in der Kunststoffschicht 32 Einstecköffnungen 36 (Fig. 3) zur positionsfixierten und elektrisch gegeneinander und gegen das Statorblechpaket 2 isolierten Aufnahme der Wicklungskontaktelemente 22, 22a angeordnet. Diese Einstecköffnungen 36 können - wie dargestellt - in. Richtung der jeweiligen Statomut 6 schlitzartig geöffnet oder aber als in diese Richtung geschlossene Öffnungen ausgebildet sein. Die Einstecköffnungen 36 mit dem Wicklungskontaktelementen 22, 22a sind bevorzugt auf einem zur Motorachse 14 koaxialen Kreis gleichmäßig (radial-symmetrisch) verteilt angeordnet. Jedes Wicklungskontaktelement 22, 22a sitzt in einer zur Motorachse 14 parallelen, d. h. axial ausgerichteten Anordnung mit einem Halteabschnitt 38 (Fig. 2) kraft- und/oder formschlüssig in der zugehörigen Einstecköffnung 36 und überragt mit einem Kontaktabschnitt 40 die Stirnseite des Statorblechpaketes 2 in axialer Richtung, Jeder Kontaktabschnitt 40 weist auf seiner radial nach außen weisenden Seite in Drahtkontaktelement 40a und auf seiner radial nach innen weisenden Seite ein Anschlußelement 40b für ein korrespondierendes Anschlußelement 24a des jeweiligen Verschaltungskontaktelementes 24 auf (vgl. auch insbesondere Fig. 6). In der bevorzugten Ausführungsform sind die oben beschriebenen Verbindungselemente 28 vorteilhafterweise von axialen Verlängerungen einer Teilmenge der Wicklungskontaktelemente, und zwar der in Fig. 2 rechts dargestellten Wicklungskontaktelemente 22a gebildet. Dabei sind die zugehörigen, für diese verlängerten-Wicklungskontaktelemente 22a vorgesehenen Einstecköffnungen 36 der Kunststoffschicht 32 als axial durchgehende Durchgangsöffnungen ausgebildet.

Wie sich aus Fig. 1, 6 und 13 ergibt, weist bei dieser Ausführungsform jedes Verschaltungskontaktelement 24 einen beispielsweise kreisringförmigen, zur Motorachse 14 koaxialen Verbindungsabschnitt 24b auf, der stemartig über jeweils einen von mehreren radialen Stegen 24c und über die Anschlußelemente 24a, 40b mit den zugehörigen Wicklungskontaktelementen 22 bzw. 22a verbunden ist. Vorzugsweise liegen die kreisförmigen Verbindungsabschnitte 24b der Verschaltungskontaktelemente 24 mit gleichem Durchmesser elektrisch z. B. über Luftspalte und/oder Isolierschichten gegeneinander isoliert axial übereinander (Fig. 1 und 6). Zweckmäßigerweise sind hierbei die radialen Stege 24c ausgehend von der jeweiligen Ebene des zugehörigen Verbindungsabschnittes 24b derart in Richtung des Statorblechpaketes 2 verkröpft ausgebildet, dass die endseitigen Anschlußelemente 24a sich als gleichartige, etwa rechtwinklige Abwinkelungen axial in die vom Statorblechpaket 2 wegweisende Richtung erstrecken und in paralleler Anlage an den jeweils zugehörigen Anschlußelementen 40b der Wicklungskontaktelemente 22, 22a mit diesen elektrisch leitend verbunden sind. Die elektrische Verbindung kann beispielsweise durch Löten, Heißpressen oder durch Ultraschallschweißen hergestellt werden. Gemäß Fig. 1 liegen die radialen Stege 24c mit ihren verkröpften Abschnitten allesamt in der gleichen Ebene, vorzugsweise etwa in Auflage auf der isolierenden Kunststoffschicht 32 auf der Stirnseite 10 des Statorblechpaketes 2. Dabei weisen die Wicklungskontaktelemente 22, 22a sowie auch die Verschaltungskontaktelemente 24 jeweils einen flachen, etwa rechteckigen Leiterquerschnitt auf, was für alle beschriebenen Abschnitte der genannten Elemente gilt. In der dargestellten Ausführung handelt es sich bei den Kontaktelementen 22, 22a, 24 um Blechformteile (Stanzbiegeteile). Dadurch kann ein großer Leiterquerschnitt für hohen Strom und geringe Stromdichte erreicht werden.

Die in den Fig. 1 bis 10 sowie 13 veranschaulichte Ausführung ist für eine Dreieckschaltung der Statorwicklungen 8 konzipiert, wozu die in diesem Beispiel neun Statorwicklungen 8 in drei. Gruppen zu je drei Statorwicklungen 8 aufgeteilt und in Dreieck verschaltet sind. Jede Statorwicklung 8 bzw. jede Wicklungslage 8a, 8b geht mit einem Wicklungsende über eines der Wicklungskontaktelemente 22, 22a unmittelbar und ohne Unterbrechung in einen Wicklungsanfang der nächsten Statorwicklung 8 (8a, 8b) über. Die Wicklungskontaktelemente sind dabei in die - drei Dreieck-Anschlußpunkten entsprechenden - drei Gruppen I, II und III eingeteilt, und für diese Anschlußpunkte I, II, III sind drei Verschaltungskontaktelemente 24 sowie auch drei Verbindungselemente 28 zur Leiterplatte 30 vorgesehen.

An dieser Stelle soll die Herstellung des Stators in der Ausführung nach Fig. 1 bis 10 mit Dreieckschaltung erläutert werden. Zunächst wird das gemäß Fig. 3 mit der Kunststoffschicht 32 versehene Statorblechpaket 2 mit den Wicklungskontaktelementen 22, 22a gemäß Fig. 2 bestückt, und zwar durch einfaches Einstecken in die jeweiligen Einstecköffnungen 36. Das so mit den Wicklungskontaktelementen bestückte Statorblechpaket 2 ist in Fig. 4 veranschaulicht. Nachfolgend werden die Statorzähne 4 in einem kontinuierlichen Wickelvorgang bewickelt. Dies soll anhand der Fig. 8 und 9 für lediglich eine Wicklungslage erläutert werden. Ausgehend von einem ersten Wicklungskontaktelement 22.1 wird der Wicklungsdraht auf einen ersten Statorzahn 4 als erste Wicklung 8.1 gewickelt und dann kontinuierlich weiter über das nächste Wicklungskontaktelement 22.2 zur räumlich, in Umfangsrichtung nächsten Statorwicklung 8.2 und so weiter. Dies bedeutet, dass die einzelnen Statorzähne 4 zunächst unabhängig von der jeweils gewünschten, gruppenweisen Wicklungsverschaltung kontinuierlich entsprechend ihrer räumlichen Anordnung nacheinander in Umfangsrichtung des Stators bewickelt werden. Dies läßt sich anhand der Figuren 8 und 9 leicht nachvollziehen. Die eigentliche gruppenweise Wicklungsverschaltung erfolgt erst später. Dadurch vereinfacht sich der Wickelvorgang, da beim Wickeln nicht mehr bestimmte Zähne "übersprungen" werden müssen. Nach dem Wickelvorgang erfolgt das Herstellen von elektrisch leitenden Verbindungen zwischen den Wicklungskontaktelementen 22,22a und den über diese geführten Wicklungsdrähten 18, und zwar beispielsweise durch Löten, Heißpressen, oder (Ultraschall-) Schweißen. Für die eigentliche Verschaltung werden schließlich die Verschaltungskontaktelemente 24 montiert und elektrisch leitende Verbindungen zwischen den korrespondierenden Anschlußelementen 24a, 40b hergestellt. Auch dies kann durch Schweißen, Löten, Heißpressen oder eine andere geeignete Maßnahme erfolgen. Dieser verschaltete Zustand ist in Fig. 8 sowie auch schaltbildartig in Fig. 10 veranschaulicht. Hierbei ist eines der je drei zu einer Gruppe I, II, III zusammengeschalteten Wicklungskontaktelemente über das verlängerte Verbindungselement 28 zur anderen Stirnseite 12 des Statorblechpaketes 2 geführt, um dort später die Leiterplatte 30 aufsetzen und anschließen zu können.

Bei der beschriebenen Herstellung ist es vorteilhaft, wenn beim Bestücken des Statorblechpaketes 2 die Wicklungskontaktelemente 22, 22a zunächst derart unvollständig in die Einstecköffnungen 36 eingesteckt werden, dass sie für den Wickelvorgang noch über die Wickelkopfebene 26 (Fig. 7) überstehen, wobei sie erst nach Abschluß des Wickelvorgangs und nach Herstellen der elektrischen Verbindungen mit den Wicklungsdrähten 18 unter Bildung von DrahtLockerungsbögen ganz eingesteckt werden. Dies führt vorteilhafterweise dazu, dass die Draht- Zugbelastung verringert wird und somit die Wicklungsdrähte und Kontaktstellen mechanisch entlastet werden, wodurch Drahtbrüche beispielsweise durch Vibrationen vermieden werden.

Die Statorzähne 4 können zudem im kontinuierlichen Durchlauf mit jeweils mindestens zwei oder mehreren, beliebig vielen Statorwicklungen 8 bzw. Wicklungslagen bewickelt werden, wobei die Statorwicklungen 8 bzw. Wicklungslagen jedes Statorzahnes 4 durch die Verbindung mit den zugehörigen Wicklungskontaktelementen parallel geschaltet werden.

Anhand der Fig. 11 und 12 soll nun eine Ausführung des Stators für eine Sternschaltung der Statorwicklungen 8 erläutert werden. Hierbei werden die Statorwicklungen 8 gruppenweise zusammengefaßt und diese Gruppen in Sternschaltung verschaltet. Dazu ist jede Statorwicklung 8 mit ihrem Wicklungsanfang und ihrem Wicklungsende mit gesonderten Wicklungskontaktelementen verbunden. Hierbei werden über die Verschaltungskontaktelemente 24 die vorhandenen Wicklungskontaktelemente in vier Gruppen aufgeteilt und verbunden, wobei diese Gruppen den Stem- Anschlußpunkten I, II, III und einem Stem- Mittelpunkt M entsprechen. Dementsprechend sind insgesamt vier Verschaltungskontaktelemente 24 und auch vier Verbindungselemente 28 zur Leiterplatte 30 vorgesehen. Die jeweils mit einem Wicklungsende und einem Wicklungsanfang zweier benachbarter Statorwicklungen 8 (in Fig. 11 und 12 beispielsweise der Wicklungen 8.1 und 8.2) verbundenen Wicklungskontaktelemente (beispielsweise 22.2.1 und 22.2.2) sind paarweise derart nahe benachbart nebeneinander angeordnet, dass beim Wickelvorgang der Wicklungsdraht 18 jeweils durchlaufend über beide jeweils benachbarten Wicklungskontaktelemente führbar und nachfolgend nach dem Herstellen des elektrischen, Kontaktes zwischen den Wicklungskontaktelementen durchtrennbar ist (vgl. in Fig. 11 und 12 die Stellen X).

Der daraus resultierende Wickelvorgang läßt sich anhand der Fig. 11 und 12 leicht nachvollziehen. So beginnt der Wickelvorgang an dem Wicklungskontaktelement 22.1.2 zur ersten Statorwicklung 8.1 und von dort über das Wicklungskontaktelement-Paar 22.2.1 und 22.2.2 zur nächsten Statorwicklung 8.2 und so weiter, bis schließlich das Wicklungskontaktelement 22.1.1 erreicht ist. Nach dem Herstellen der elektrischen Kontakte und dem Trennen der Wicklungsenden und Anfänge an den Stellen X erfolgt die Montage der Verschaltungskontaktelemente 24 durch axiales Einsetzen in den Zentralbereich ahalog zur Ausführung nach Fig. 1 bis 10 mit Dreieckschaltung.

In Fig. 13 sind die Bestandteile des erfindungsgemäßen Stators 1 zusammen mit weiteren Bestandteilen eines Elektro-Außenläufermotors veranschaulicht. Der Stator 1 wird auf seiner der Verschaltungsanordnung 20 gegenüberliegenden Seite über ein Lagertragrohr 42 mit einem Flansch 44 verbunden. Auf der gegenüberliegenden Stirnseite 10 wird der Stator von einem Außenläufer 46 umschlössen. Auf der Seite des Flansches 44 schließt sich an diesen vorzugsweise ein Elektronikgehäuse 48 mit Gehäuseteilen 48a und 48b an, und innerhalb dieses Elektronikgehäuses 48 ist die Leiterplatte 30 untergebracht. Die Verbindungselemente 28 der Verschaltungsanordnung 20 erstrecken sich durch nicht erkennbare Flanschöffnungen des Statorflansches 44 sowie durch Gehäuseöffnungen 50 des Elektronikgehäuses 48 bis zu entsprechenden Kontaktelementen der Leiterplatte 30.

Der erfindungsgemäße Stator 1 bzw. der mit diesem ausgestattete Motor kann mit Vorteil zum Antrieb eines Lüfters eingesetzt werden, wobei der Rotor bzw. Außenläufer 46 ein nicht dargestelltes Lüfterrad trägt.

Es soll nun noch die Ausführungsvariante nach Fig. 14 und 15 bezüglich ihrer Besonderheiten erläutert werden, wobei schon beschriebene, gleichartige Bestandteile mit den gleichen Bezugsziffem wie in Fig. 1 bis 13 bezeichnet sind. Diese Ausführung unterscheidet sich von den Fig. 1 bis 13 einerseits dadurch, dass beispielhaft zwölf (anstatt neun) Statorzähne 4 und Nuten 6 vorgesehen sind, die mit folglich zwölf Statorwicklungen (in Fig. 14 noch nicht dargestellt) bewickelt werden. Andererseits sind die Elemente der Verschaltungsanordnung 20 etwas anders ausgebildet. Hierbei sind gemäß Fig. 14 Wicklungskontaktelemente 52 vorgesehen, die jeweils in Umfangsrichtung nebeneinander ein Drahtkontaktelement 52a in Form einer V-förmigen Aufnahme und ein Verschaltungs-Anschlußelement 52b in Form eines radial nach innen ragenden, insbesondere axial (hochkant) ausgerichteten Steges aufweisen. Weiterhin - vergleiche dazu auch Fig. 15 - sind Verschaltungskontaktelemente 54 vorgesehen; die jeweils - ähnlich Fig. 1 bis 13 - ein im Wesentlichen kreisscheibenförmiges Verbindungselement 54a und etwa radial nach außen weisende Anschlußelemente 54b zum Kontaktieren der Verschaltungs-Anschlußelemente 52b aufweisen. Hierbei sind auch die Anschlußelemente 54b als axial (hochkant) ausgerichtete Streifen zur parallelen Anlage an den korrespondierenden Anschlußelementen 52b ausgebildet und mit dem jeweiligen Verbindungselement 54a über jeweils einen aus der Scheibenebene nach oben um annähernd 80° bis 90° abgewinkelten Übergangsabschnitt 54c verbunden.

Gemäß Fig. 15 ist hierbei vorteilhafterweise ein zusätzliches Fixierelement 56 aus Isoliermaterial vorgesehen, welches die Verschaltungselemente 54 bereits vor dem Herstellen der elektrischen Anschlüsse derart vorfixiert, dass sie einerseits gegeneinander über hinreichend große Luftspalte beabstandet und dadurch elektrisch gegeneinander isoliert sowie andererseits bezüglich der Ausrichtung der Anschlußelemente 54b lagerichtig zu den korrespondierenden Anschlußelementen 52b der Wicklungskontaktelemente 52 gehalten sind.

Im Übrigen entspricht die Ausführung bezüglich des Herstellens der leitenden Verbindungen und des Wickelvorgangs weitgehend der Ausführung nach Fig. 1 bis 10.

Die Erfindung ist nicht auf die dargestellten und beschriebenen Ausführungsbeispiele sondern durch die folgenden Ansprüche beschränkt.

## Patentansprüche

1. Stator (1) für einen Elektromotor, insbesondere für einen leistungsstarken Niederspannungsmotor der Außenläufer-Bauart, mit einem Statorblechpaket (2) mit einer Anzahl von Statomuten (6) und Statorzähnen (4) zur Aufnahme von Statorwicklungen (8) und mit einer Verschaltungsanordnung (20) zum Verschalten von Wicklungsdrähten (18) der Statorwicklungen (8), wobei die um die Statorzähne (4) durch die Statomuten (6) gewickelten Statorwicklungen (8) auf beiden Stirnseiten (10, 12) das Statorblechpaket (2) mit einem Wickelkopf (16) überragen,
**dadurch gekennzeichnet, dass** die Verschaltungsanordnung (20) aus Wicklungskontaktelementen (22, 22a, 52) sowie aus Verschaltungskontaktelementen (24, 54) besteht, wobei zumindest die Verschaltungskontaktelemente (24, 54) auf einer Stirnseite (10) des Statorblechpaketes (2) innerhalb eines radial von den Statorwicklungen (8) und axial von einer vom Wickelkopf (16) definierten Ebene (26) begrenzten Raumes angeordnet sind, wobei die Wicklungskontaktelemente (22, 22a, 52) den Statorzähnen (4) bzw. Statomuten (6) derart als statorseitig ortsfeste Wickelstützpunkte zugeordnet sind, dass die Statorwicklungen (8) in einem kontinuierlichen Wickelvorgang auf die Statorzähne (4) und jeweils mit den Wicklungsdrähten (18) über die Wicklungskontaktelemente (22, 22a, 52) wickelbar sind, wobei jedes Verschaltungskontaktelement (24, 54) eine bestimmte Gruppe (I, II,III; M) der Wicklungskontaktelemente (22, 22a, 52) miteinander elektrisch verbindet.

2. Stator nach Anspruch 1,
**dadurch gekennzeichnet, dass** die einzelnen Gruppen (I, II, III; M) der Wicklungskontaktelemente (22, 22a, 52) über Verbindungselemente (28) mit einer Leiterplatte (30) verbunden sind, wobei die Leiterplatte (30) vorzugsweise im Bereich der den Verschaltungskontaktelementen (24, 54) gegenüberliegenden Stirnseite (12) angeordnet ist.

3. Stator nach Anspruch 1 oder 2,
**dadurch gekennzeichnet, dass** dasStatorblechpaket(2) zumindest auf seinen beiden Stirnseiten (10, 12) sowie innerhalb der Statornuten (6) mit einer elektrisch isolierenden Kunststoffschicht (32) versehen ist, wobei vorzugsweise jeweils im Bereich eines Nutgrundes (34) jeder Statomut (6) in der Kunststoffschicht (32) Einstecköffnungen (36) zur positionsfixierten und elektrisch isolierten Aufnahme der Wicklungskontaktelemente (22, 22a, 52) angeordnet sind.

4. Stator nach einem der Ansprüche 1 bis 3,
**dadurch gekennzeichnet, dass** die Wicklungskontaktelemente (22, 22a, 52) auf einem zu einer Motorachse (14) koaxialen Kreis insbesondere radialsymmetrisch verteilt angeordnet sind.

5. Stator nach Anspruch 3 oder 4,
**dadurch gekennzeichnet, dass** jedes Wicklungskontaktelement (22, 22a, 52) in einer zur Motorachse (14) parallelen, d. h. axial ausgerichteten Anordnung mit einem Halteabschnitt (38) in der zugehörigen Einstecköffnung (36) sitzt und mit einem Kontaktabschnitt (40) das Statorblechpaket (2) überragt, wobei der Kontaktabschnitt (40) ein Drahtkontaktelement (40a, 52a) und ein Anschlußelement (40b, 52b) für ein korrespondierendes Anschlußelement (24a, 54b) des jeweils Verschaltungskontaktelementes (24, 54) aufweist.

6. Stator nach einem der Ansprüche 2 bis 5,
**dadurch gekennzeichnet, dass** die Verbindungselemente (28) von der einen Stirnseite (10) auf die andere Stirnseite (12) des Statorblechpaketes (2) durchgeführt und insbesondere von axialen Verlängerungen eines Teils der Wicklungskontaktelemente (22a) gebildet sind, wobei die zugehörigen Einstecköffnungen (36) der Kunststoffschicht (32) als axial durchgehende Durchgangsöffnungen ausgebildet sind.

7. Stator nach einem der Ansprüche 1 bis 6,
**dadurch gekennzeichnet, dass** jedes Verschaltungskontaktelement (24, 54) einen zur Motorachse (14) koaxialen Verbindungsabschnitt (24b, 54a) aufweist, der stemartig über radiale Stege (24c, 54b) mit den zugehörigen Wicklungskontaktelementen (22, 22a, 52) verbunden ist.

8. Stator nach Anspruch 7,
**dadurch gekennzeichnet, dass** die Verbindungsabschnitte (24b, 54a) der Verschaltungskontaktelemente (24, 54) etwa kreisringscheibenförmig ausgebildet sind und mit gleichem Durchmesser elektrisch gegeneinander isoliert axial übereinander liegen.

9. Stator nach Anspruch 7 oder 8,
**dadurch gekennzeichnet, dass** die radialen Stege (24c) der Verschaltungskontaktelemente (24) ausgehend von dem jeweiligen Verbindungsabschnitt (24b) derart in Richtung des Statorblechpaketes (2) verkröpft ausgebildet sind, dass die Anschlußelemente (24a) sich als gleichartige, rechtwinklige Abwinkelungen axial in die von dem Statorblechpaket (2) wegweisenden Richtung erstrecken und in paralleler Anlage an den Anschlußelementen (40b) der Wicklungskontaktelemente (22, 22a) mit diesen elektrisch leitend verbunden sind.

10. Stator nach Anspruch 1 bis 9,
**dadurch gekennzeichnet, dass** die Wicklungskontaktelemente (22, 22a, 52) und die Verschaltungskontaktelemente (24, 54) jeweils einen flachen, etwa rechteckigen Leiterquerschnitt aufweisen.

11. Stator nach einem der Ansprüche 1 bis 10,
**dadurch gekennzeichnet, dass** jeder Statorzahn (4) eine aus mindestens zwei Stator-Wicklungslagen (8a, 8b) bestehende Statorwicklung (8) trägt, wobei die Wicklungslagen (8a ,8b) durch Anschluß an jeweils den gleichen Wicklungskontaktelementen (22, 22a, 52) elektrisch parallel geschaltet sind.

12. Stator nach einem der Ansprüche 1 bis 11,
**dadurch gekennzeichnet, dass** die Statorwicklungen (8) gruppenweise in Dreieckschaltung verschaltet sind, wozu jede Statorwicklung (8) mit einem Wicklungsende über eines der Wicklungskontaktelemente (22, 22a, 52) in einen Wicklungsanfang der nächsten Statorwicklung (8) übergeht, wobei für drei Dreieck-Anschlußpunkte (I, II, III) drei Verschaltungskontaktelemente (24, 54) und drei Verbindungselemente (28) zur Leiterplatte (30) vorgesehen sind.

13. Stator nach einem der Ansprüche 1 bis 11,
**dadurch gekennzeichnet, dass** dieStatorwicklungen(8) gruppenweise in Sternschaltung verschaltet sind, wozu jede Statorwicklung (8) mit ihrem Wicklungsanfang und ihrem Wicklungsende mit gesonderten Wicklungskontaktelementen (22, 52) verbunden ist, wobei für drei Stem-Anschlußpunkte (I, II, III) und einen Stern-Mittelpunkt (M) insgesamt vier Verschaltungskontaktelemente (24, 54) und vier Verbindungselemente (28) zur Leiterplatte (30) vorgesehen sind.

14. Stator nach Anspruch 13,
**dadurch gekennzeichnet, dass** die jeweils mit einem Wicklungsende und einem Wicklungsanfang zweier benachbarter Statorwicklungen (8) verbundenen Wicklungskontaktelemente (22, 52) paarweise derart nahe benachbart nebeneinander angeordnet sind, dass beim Wickelvorgang der Wicklungsdraht (18) jeweils durchlaufend über beide Wicklungskontaktelemente führbar und nachfolgend zwischen den Wicklungskontaktelementen durchtrennbar ist.

15. Elektromotor, insbesondere Außenläufermotor, mit einem Stator (1) nach einem der vorhergehenden Ansprüche und einem drehbar gelagerten Rotor, insbesondere einem den Stator (1) übergreifenden Außenläufer (46).

16. Elektromotor nach Anspruch 15,
**dadurch gekennzeichnet, dass** der Stator (1) an einem Statorflansch (44) befestigt ist, und dass die Leiterplatte (30) des Stators (1) in einem auf der dem Stator (1) gegenüberliegenden Außenseite des Statorflansches (44) angeordneten Elektronikgehäuse (48) untergebracht ist, wobei sich die Verbindungselemente (28) der Verschaltungsanordnung (20) durch Flanschöffnungen des Statorflansches (44) sowie durch Gehäuseöffnungen (50) des Elektronikgehäuses (48) erstrecken.

17. Lüfter mit einem Elektromotor nach Anspruch 15 oder 16, wobei der Rotor (46) ein Lüfterrad aufweist.

18. Verfahren zum Herstellen eines Stators (1) nach einem der Ansprüche 1 bis 14, **gekennzeichnet durch** folgende Verfahrensschritte:
- Bestücken des mit einer Kunststoffschicht (32) versehenen Statorblechpaketes (2) mit den Wicklungskontaktelementen (22, 22a, 52) **durch** Einstecken in die jeweiligen Einstecköffnungen (36),
- Bewickeln der Statorzähne (4) in einem kontinuierlichen Wickelvorgang, wobei der Wicklungsdraht (18) durchlaufend ausgehend von einem ersten . Wicklungskontaktelement (22/22a, 52) zu dem ersten Statorzahn (4) und jeweils zwischen den weiteren Statorzähnen (4) über die jeweiligen Wicklungskontaktelemente (22/22a, 52) geführt wird,
- Herstellen von elektrisch leitenden Verbindungen zwischen den Wicklungskontaktelementen (22/22a, 52) und den über diese geführten Wicklungsdrähten (18),
- Montage der Verschaltungskontaktelemente (24, 54) auf einer Stirnseite (10) des Statorblechpaketes (2) innerhalb eines radial von den Statorwicklungen (8) und axial von einer vom Wickelkopf (16) definierten Ebene (26) begrenzten Raumes und herstellen von elektrisch leitenden Verbindungen mit den jeweiligen Wicklungskontaktelementen.

19. Verfahren nach Anspruch 18,
**dadurch gekennzeichnet, dass** beim Bestücken des Statorblechpaketes (2) die Wicklungskontaktelemente (22, 22a, 52) zunächst derart unvollständig in die Einstecköffnungen (36) eingesteckt werden, dass sie für den Wickelvorgang noch über die Wickelkopfebene (26) überstehen, und dass nach Abschluß des Wickelvorgangs und nach Herstellen der elektrischen Verbindungen mit den Wicklungsdrähten (18) die Wicklungskontaktelemente (22, 22a, 52) unter Bildung von Drahtlockerungsbögen ganz eingesteckt werden.

20. Verfahren nach Anspruch 18 oder 19,
**dadurch gekennzeichnet, dass** die Statorzähne (4) im kontinuierlichen Durchlauf mit jeweils mindestens zwei oder mehreren Statorwicklungslagen (8a, 8b) bewickelt werden, die durch Verbindung mit den zugehörigen Wicklungskontaktelementen (22, 22a, 52) parallel geschaltet werden.

21. Verfahren nach einem der Ansprüche 18 bis 20,
**dadurch gekennzeichnet, dass** im Falle einer Sternschaltung der Statorwicklungen (8) nach dem Wickelvorgang jeweils die Wicklungsdrähte (18) zwischen den benachbarten, einem Wicklungsende und einem nächsten Wicklungsanfang zugeordneten Wicklungskontaktelementen (22.x.1, 22.x.2) durchtrennt werden.

## Revendications

1. Stator (1) pour un moteur électrique, en particulier pour un moteur basse tension de grande puissance du type à induit extérieur, avec une pile de tôles de stator (2) avec un nombre de fentes de stator (6) et de dents de stator (4) pour la réception d'enroulements de stator (8) et avec un dispositif de commutation des contacts (20) pour changer les contacts des fils d'enroulement (18) des enroulements de stator (8), dans lequel les enroulements de stator (8) enroulés autour des dents de stator (4) par les fentes de stator (6) dépassent sur les deux faces frontales (10, 12) de la pile de tôles de stator (2) avec une tête d'enroulement (16),
**caractérisé en ce que** le dispositif de commutation des contacts (20) consiste en des éléments de contact des enroulements (22, 22a, 52) ainsi qu'en des éléments de commutation des contacts (24, 54), sachant qu'au moins les éléments de commutation des contacts (24, 54) sont disposés sur une face frontale (10) de la pile de tôles de stator (2) à l'intérieur d'un espace limité radialement par les enroulements de stator (8) et axialement par un plan (26) défini par la tête d'enroulement (16), sachant que les éléments de contact des enroulements (22, 22a, 52) sont affectés aux dents de stator (4), respectivement aux fentes de stator (6) comme points d'appui d'enroulement fixes côté stator, de telle sorte que les enroulements de stator (8) peuvent être enroulés dans un processus d'enroulement continu sur les dents de stator (4) et respectivement avec les fils d'enroulement (18) par-dessus les éléments de contact des enroulements (22, 22a, 52), sachant que chaque élément de commutation des contacts (24, 54) relie électriquement ensemble un groupe particulier (I, II, III ; M) des éléments de contact des enroulements (22, 22a, 52).

2. Stator selon la revendication 1,
**caractérisé en ce que** les différents groupes (I, II, III ; M) des éléments de contact des enroulements (22, 22a, 52) sont reliés par des éléments de liaison (28) à une plaque à circuit imprimé (30), sachant que la plaque à circuit imprimé (30) est disposée de préférence dans la zone de la face frontale (12) opposée aux éléments de commutation des contacts (24, 54).

3. Stator selon la revendication 1 ou 2,
**caractérisé en ce que** la pile de tôles de stator (2) est dotée au moins sur ses deux faces frontales (10, 12) ainsi qu'à l'intérieur des fentes de stator (6) d'une couche de plastique (32) isolante électriquement, sachant que des ouvertures d'enfichage (36) sont disposées dans la couche de plastique (32), de préférence respectivement dans la zone d'un fond de fente (34) de chaque fente de stator (6), pour la réception fixée en position et isolée électriquement des éléments de contact des enroulements (22, 22a, 52).

4. Stator selon l'une des revendications 1 à 3,
**caractérisé en ce que** les éléments de contact des enroulements (22, 22a, 52) sont disposés sur un cercle coaxial à un axe du moteur (14), en particulier répartis selon une symétrie radiale.

5. Stator selon la revendication 3 ou 4,
**caractérisé en ce que** chaque élément de contact des enroulements (22, 22a, 52) se trouve dans une disposition parallèle à l'axe du moteur (14), c'est-à-dire dirigé axialement, avec une section d'arrêt (38) dans l'ouverture d'enfichage correspondante (36), et dépasse de la pile de tôles de stator (2) par une section de contact (40), sachant que la section de contact (40) comporte un élément de contact de fil (40a, 52a) et un élément de branchement (40b, 52b) pour un élément de branchement (24a, 54b) correspondant de l'élément de commutation des contacts (24, 54) respectif.

6. Stator selon l'une des revendications 2 à 5,
**caractérisé en ce que** les éléments de liaison (28) sont passés d'une face frontale (10) à l'autre face frontale (12) de la pile de tôles de stator (2) et sont formés en particulier par des prolongement axiaux d'une partie des éléments de contact des enroulements (22a), sachant que les ouvertures d'enfichage (36) correspondantes de la couche de plastique (32) sont configurées comme ouvertures axialement traversantes.

7. Stator selon l'une des revendications 1 à 6,
**caractérisé en ce que** chaque élément de commutation des contacts (24, 54) comporte une section de liaison (24b, 54a) coaxiale à l'axe du moteur (14), qui est reliée en forme d'étoile par l'intermédiaire de nervures radiales (24c, 54b) aux éléments de contact correspondants des enroulements (22, 22a, 52).

8. Stator selon la revendication 7,
car actér isé en ce que les sections de liaison (24b, 54a) des éléments de commutation des contacts (24, 54) sont configurées à peu près en forme de disques en anneaux circulaires et se trouvent axialement les unes au-dessus des autres et avec le même diamètre, isolées électriquement les unes des autres.

9. Stator selon la revendication 7 ou 8,
**caractérisé en ce que** les nervures radiales (24c) des éléments de commutation des contacts (24), partant de la section de liaison (24b) respective, sont configurées coudées de telle sorte en direction de la pile de tôles de stator (2) que les éléments de branchement (24a) s'étendent axialement comme coudes à angle droit de même nature dans la direction détournée de la pile de tôles de stator (2) et, en positionnement parallèle contre l'élément de branchement (40b) des éléments de contact des enroulements (22, 22a), sont reliées de façon électriquement conductrice à ces derniers.

10. Stator selon l'une des revendications 1 à 9,
**caractérisé en ce que** les éléments de contact des enroulements (22, 22a, 52) et les éléments de commutation des contacts (24, 54) présentent chacun une section de conducteur plate à peu près rectangulaire.

11. Stator selon l'une des revendications 1 à 10,
**caractérisé en ce que** chaque dent de stator (4) porte un enroulement de stator (8) consistant en au moins deux couches d'enroulement de stator (8a, 8b), sachant que les couches d'enroulement de stator (8a, 8b) sont montées électriquement en parallèle par branchement chacune aux mêmes éléments de contact des enroulements (22, 22a, 52).

12. Stator selon l'une des revendications 1 à 11,
**caractérisé en ce que** les enroulements de stator (8) sont montés par groupes en montage triangle, ce pour quoi chaque enroulement de stator (8) se poursuit avec une fin d'enroulement par l'intermédiaire d'un des éléments de contact des enroulements (22, 22a, 52) en un début d'enroulement de l'enroulement de stator (8) suivant, sachant que pour les points de branchement du triangle (I, II, III), trois éléments de commutation des contacts (24, 54) et trois éléments de liaison (28) à la plaque à circuit imprimé (30) sont prévus.

13. Stator selon l'une des revendications 1 à 11,
**caractérisé en ce que** les enroulements de stator (8) sont branchés en groupe en montage triangle, ce pour quoi chaque enroulement de stator (8) est relié avec son début d'enroulement et sa fin d'enroulement à des éléments particuliers de contact des enroulements (22, 52), sachant que pour trois points de branchement en étoile (I, II, III), en tout quatre éléments de commutation des contacts (24, 54) et quatre éléments de liaison (28) à la plaque à circuit imprimé (30) sont prévus.

14. Stator selon la revendication 13,
**caractérisé en ce que** les éléments de contact des enroulements (22, 52), reliés respectivement à une fin d'enroulement et à un début d'enroulement de deux enroulements de stator (8) voisins, sont disposés voisins par paires si près l'un à côté de l'autre que, lors du processus d'enroulement, le fil d'enroulement (18) peut chaque fois être conduit de façon ininterrompue par les deux éléments de contact des enroulements et peut être ensuite sectionné entre les éléments de contact des enroulements.

15. Moteur électrique, en particulier moteur à induit extérieur, avec un stator (1) selon l'une des revendications précédentes et un rotor monté tournant, en particulier un induit extérieur (46) englobant le stator (1).

16. Moteur électrique selon la revendication 15,
**caractérisé en ce que** le stator (1) est fixé à une bride de stator (44) et **en ce que** la plaque à circuit imprimé (30) du stator (1) est logée dans un boîtier électronique (48) disposé sur la face extérieure de la bride de stator (44) opposée au stator (1), sachant que les éléments de liaison (28) du dispositif de commutation des contacts (20) s'étendent par des ouvertures de la bride du stator (44) ainsi que par des ouvertures (50) du boîtier électronique (48).

17. Ventilateur avec un moteur électrique selon la revendication 15 ou 16, sachant que le rotor (46) comporte une roue de ventilateur.

18. Procédé de fabrication d'un stator (1) selon l'une des revendications 1 à 14,
**caractérisé par** les étapes de procédé suivantes :
- garnissage de la pile de tôles de stator (2), dotée d'une couche de plastique (32), des éléments de contact des enroulements (22, 22a, 52) par enfichage dans les ouvertures d'enfichage (36) respectives,
- bobinage des dents de stator (4) dans un processus de bobinage continu, dans lequel le fil d'enroulement (18) est conduit continûment en partant d'un premier élément de contact des enroulements (22/22a, 52) vers la première dent de stator (4) et respectivement entre les autres dents de stator (4) par l'intermédiaire des éléments de contact respectifs des enroulements (22/22a, 52).
- réalisation de liaisons conductrices électriques entre les éléments de contact des enroulements (22/22a, 52) et les fils d'enroulement (18) conduits par l'intermédiaire de ces derniers,
- montage des éléments de commutation des contacts (24, 54) sur une face frontale (10) de la pile de tôles de stator (2) à l'intérieur d'un espace limité radialement par les enroulements de stator (8) et axialement par un plan (26) défini par la tête d'enroulement (16), et réalisation de liaisons conductrices électriquement avec les éléments de contact des enroulements respectifs.

19. Procédé selon la revendication 18,
**caractérisé en ce que** lors du garnissage de la pile de tôles de stator (2), les éléments de contact des enroulements (22, 22a, 52) sont enfichés d'abord de façon si incomplète dans les ouvertures d'enfichage (36) qu'ils dépassent encore pour le processus de bobinage au-dessus du plan (26) de la tête d'enroulement, et qu'après l'accomplissement du processus de bobinage et après la réalisation des liaisons électriques avec les fils d'enroulement (18), les éléments de contact des enroulements (22, 22a, 52) sont enfichés complètement moyennant la formation d'arcs de détente du fil.

20. Procédé selon la revendication 18 ou 19,
**caractérisé en ce que** les dents de stator (4) sont bobinées en continu avec au moins deux ou plusieurs couches d'enroulement de stator (8a, 8b) qui sont connectées en parallèle par liaison avec les éléments correspondants de contact des enroulements (22, 22a, 52).

21. Procédé selon l'une des revendications 18 à 20,
**caractérisé en ce que**, dans le cas d'un branchement en étoile des enroulements de stator (8), les fils d'enroulement (18) entre les éléments de contact des enroulements (22.x.1, 22.x.2) voisins, affectés à une fin d'enroulement et à un début d'enroulement suivant, sont respectivement sectionnés après le processus de bobinage.

## Claims

1. A stator (1) for an electric motor, in particular for a high-power low-voltage motor of the external-rotor type, with a stator core stack (2) with a number of stator slots (6) and stator teeth (4) for receiving stator windings (8) and with an interconnection assembly (20) for interconnecting winding wires (18) of the stator windings (8), wherein the stator windings (8) wound through the stator slots (6) around the stator teeth (4) project on both end faces (10, 12) beyond the stator core stack (2) with a winding head (16), **characterized in that** the interconnection assembly (20) comprises winding contact elements (22, 22a, 52) and interconnection contact elements (24, 54), wherein at least the interconnection contact elements (24, 54) are arranged on an end face (10) of the stator core stack (2) inside a space bounded radially by the stator windings (8) and axially by a plane (26) defined by the winding head (16), wherein the winding contact elements (22, 22a, 52) are associated with the stator teeth (4) or the stator slots (6) as winding-support points fixed with respect to the stator, in such a way that the stator windings (8) are capable of being wound onto the stator teeth (4) in a continuous winding process and in each case with the winding wires (18) by way of the winding contact elements (22, 22a, 52), wherein each interconnection contact element (24, 54) connects a specified group (I, II, III; M) of the winding contact elements (22, 22a, 52) to one another electrically.

2. A stator according to Claim 1, **characterized in that** the individual groups (I, II, III; M) of the winding contact elements (22, 22a, 52) are connected by way of connecting elements (28) to a printed circuit board (30), wherein the printed circuit board (30) is preferably arranged in the region of the end face (12) opposite the interconnection contact elements (24, 54).

3. A stator according to Claim 1 or 2, **characterized in that** the stator core stack (2) is provided with an electrically insulating plastics-material layer (32) at least on its two end faces (10, 12) and inside the stator slots (6), wherein insertion openings (36) are preferably arranged in each case in the region of a bottom (34) of each stator slot (6) in the plastics-material layer (32) in order to fix the position of the winding contact elements (22, 22a, 52) and to receive them in an electrically insulated manner.

4. A stator according to any one of Claims 1 to 3, **characterized in that** the winding contact elements (22, 22a, 52) are arranged distributed, in particular radially symmetrically, on a circle coaxial with an axis (14) of the motor.

5. A stator according to Claim 3 or 4, **characterized in that** each winding contact element (22, 22a, 52) is mounted in an arrangement parallel, i.e. orientated axially, to the axis (14) of the motor with a holding portion (38) in the associated insertion opening (36) and projects beyond the stator core stack (2) with a contact portion (40), wherein the contact portion (40) comprises a wire-contact element (40a, 52a) and a connector element (40b, 52b) for a corresponding connector element (24a, 54b) of the respective interconnection contact element (24, 54).

6. A stator according to any one of Claims 2 to 5, **characterized in that** the connecting elements (28) are passed through from one end face (10) to the other end face (12) of the stator core stack (2) and are formed, in particular, by axial extensions of part of the winding contact elements (22a), wherein the associated insertion openings (36) of the plastics-material layer (32) are constructed in the form of axially continuous through-openings.

7. A stator according to any one of Claims 1 to 6, **characterized in that** each interconnection contact element (24, 54) comprises a connecting portion (24b, 54a) which is coaxial with the axis (14) of the motor and which is connected to the respective winding contact elements (22, 22a, 52) in the manner of a star by way of radial webs (24c, 54b).

8. A stator according to Claim 7, **characterized in that** the connecting portions (24b, 54a) of the interconnection contact elements (24, 54) are made substantially in the shape of annular discs and rest axially one above the another with the same diameter whilst being electrically insulated from one another.

9. A stator according to Claim 7 or 8, **characterized in that** the radial webs (24c) of the interconnection contact elements (24) starting from the respective connecting portion (24b) are bent over in the direction of the stator core stack (2) in such a way that the connector elements (24a) extend as similar right-angled angle members axially in the direction facing away from the stator core stack (2) and, in a parallel arrangement on the connector elements (40b) of the winding contact elements (22, 22a), are connected to the latter in an electrically conductive manner.

10. A stator according to Claims 1 to 9, **characterized in that** the winding contact elements (22, 22a, 52) and the interconnection contact elements (24, 54) have a flat, substantially rectangular conductor cross-section in each case.

11. A stator according to any one of Claims 1 to 10, **characterized in that** each stator tooth (4) carries a stator winding (8) comprising at least two stator-winding layers (8a, 8b), wherein the winding layers (8a, 8b) are arranged electrically in parallel by connection to the same winding contact elements (22, 22a, 52) in each case.

12. A stator according to any one of Claims 1 to 11, **characterized in that** the stator windings (8) are connected in groups in a delta connection, for which purpose each stator winding (8) passes with one end by way of one of the winding contact elements (22, 22a, 52) into a beginning of the next stator winding (8), wherein three interconnection contact elements (24, 54) and three connecting elements (28) to the printed circuit board (30) are provided for three delta connection points (I, II, III).

13. A stator according to any one of Claims 1 to 11, **characterized in that** the stator windings (8) are connected in groups in a star connection, for which purpose each stator winding (8) is connected by its beginning and its end to separate winding contact elements (22, 52), wherein altogether four interconnection contact elements (24, 54) and four connecting elements (28) to the printed circuit board (30) are provided for three star connection points (I, II, III) and one star centre point (M).

14. A stator according to Claim 13, **characterized in that** the winding contact elements (22, 52) connected in each case to one end and one beginning of two adjacent stator windings (8) are arranged in pairs closely adjacent beside one another in such a way that during the winding procedure the winding wire (18) in each case is capable of being guided continuously over the two winding contact elements and is subsequently capable of being severed between the winding contact elements.

15. An electric motor, in particular an external-rotor motor, with a stator (1) according to any one of the preceding Claims and a rotatably mounted rotor, in particular an external rotor (46) engaging over the stator (1).

16. An electric motor according to Claim 15, **characterized in that** the stator (1) is fastened to a stator flange (44), and the printed circuit board (30) of the stator (1) is housed in an electronics casing (48) arranged on the outside of the stator flange (44) opposite the stator (1), wherein the connecting elements (28) of the interconnection assembly (20) extend through openings in the stator flange (44) and through openings (50) in the electronics casing (48).

17. A fan with an electric motor according to Claim 15 or 16, wherein the rotor (46) has a fan wheel.

18. A method of producing a stator (1) according to any one of Claims 1 to 14, **characterized by** the following method steps:
- equipping the stator core stack (2) provided with a plastics-material layer (32) with the winding contact elements (22, 22a, 52) by insertion into the respective insertion openings (36),
- winding the stator teeth (4) in a continuous winding procedure, wherein the winding wire (18) is guided in a continuous manner starting from a first winding contact element (22 / 22a, 52) to the first stator tooth (4) and in each case between the further stator teeth (4) by way of the respective winding contact elements (22 / 22a, 52),
- producing electrically conductive connections between the winding contact elements (22 / 22a, 52) and the winding wires (18) guided over them,
- assembling the interconnection contact elements (24, 54) on one end face (10) of the stator core stack (2) inside a space bounded radially by the stator windings (8) and axially by a plane (26) defined by the winding head (16), and producing electrically conductive connections with the respective winding contact elements.

19. A method according to Claim 18, **characterized in that** during the equipping of the stator core stack (2) the winding contact elements (22, 22a, 52) are first inserted in an incomplete manner into the insertion openings (36) in such a way that they still project beyond the plane (26) of the winding head for the winding procedure, and after the conclusion of the winding procedure and after the production of the electrical connections with the winding wires (18) the winding contact elements (22, 22a, 52) are inserted completely so as to form wire-release clips.

20. A method according to Claim 18 or 19, **characterized in that** the stator teeth (4) have at least two or more stator-winding layers (8a, 8b) wound around them in each case in a continuous process, the stator-winding layers (8a, 8b) being arranged in parallel by connection to the associated winding contact elements (22, 22a, 52).

21. A method according to any one of Claims 18 to 20, **characterized in that** in the case of a star connection of the stator windings (8), after the winding procedure, the winding wires (18) are severed in each case between the adjacent winding contact elements (22.x.1, 22.x.2) associated with an end of a winding and a following beginning of a winding.
